Europäisches Patentamt

European Patent Office

Office européen des brevets

(11) Veröffentlichungsnummer: **0 280 190**
**A2**

(12) **EUROPÄISCHE PATENTANMELDUNG**

(21) Anmeldenummer: **88102355.0**

(22) Anmeldetag: **18.02.88**

(51) Int. Cl.4: **B29C 43/08** , B23Q 39/04

(30) Priorität: **25.02.87 DE 3705946**

(43) Veröffentlichungstag der Anmeldung:
**31.08.88 Patentblatt 88/35**

(84) Benannte Vertragsstaaten:
**DE FR GB IT**

(71) Anmelder: **Krupp Corpoplast Maschinenbau GmbH.**
**Angerburger Strasse 24**
**D-2000 Hamburg 70(DE)**

(72) Erfinder: **Albrecht, Peter**
**Sülzbrackring 1**
**D-2050 Hamburg 80(DE)**
Erfinder: **Appel, Adolf**
**Bauernworth 11**
**D-2111 Egestorf(DE)**
Erfinder: **Reymann, Folgang**
**Groten Hoff 15**
**D-2000 Hamburg 67(DE)**
Erfinder: **Vogel, Klaus**
**Rütersberg 4a**
**D-2000 Barsbüttel(DE)**
Erfinder: **Werner, Hermann**
**Kirchenredder 4**
**D-2000 Hamburg 63(DE)**
Erfinder: **Wiedenfeld, Walter**
**Tannenweg 2b**
**D-2000 Hamburg 62(DE)**

(74) Vertreter: **Koepsell, Helmut, Dipl.-Ing.**
**Mittelstrasse 7**
**D-5000 Köln 1(DE)**

(54) Vorrichtung zum Behandeln von Formlingen aus Kunststoff.

(57) Bei einer Vorrichtung zum Bearbeiten von Formlingen aus Kunststoff mit einem im wesentlichen zylindrischen Grundrahmen und einer zentralen, dazu koaxialen Kurventrommel, die um ihre Längsachse drehbar gelagert und außenseitig mit Arbeitskurven versehen ist, und mehreren entlang dem Umfang des Rahmens nebeneinander angeordneten Behandlungsstationen mit Werkzeugen zur Bearbeitung der Kunststoff-Formlinge sind die Werkzeuge von vertikal bewegbaren Schlitten getragen, von denen jeder durch einen in einer Kurve der Kurventrommel geführte Kurvenrolle auf-und abbewegt wird. Die Kurvenrolle wird von einem Antriebsschlitten getragen. Werkzeugschlitten und Antriebsschlitten sind jeweils für sich am Gehäuse geführt und über nicht-starre Verbindungsmittel miteinander verbunden. Die vertikal verlaufenden Führungsmittel für beide Schlitten sind in der Projektion auf eine Ebene senkrecht zur Bewegungsrichtung des Schlittens zwischen Kurvenrolle und dem Punkt angeordnet, an welchem die aus der Behandlung des Formlings resultierende Reaktionskraft am Arbeitsschlitten angreift.

## Vorrichtung zum Behandeln von Formlingen aus Kunststoff

Die Erfindung betrifft eine Vorrichtung zum Behandeln von Formlingen aus Kunststoff mit einem im wesentlichen zylindrischen Grundrahmen, dessen Längsachse vertikal verläuft, und einer zentralen, dazu koaxialen Kurventrommel, die um die Längsachse drehbar gelagert und außenseitig mit umlaufenden Arbeitskurven versehen ist, und mehreren entlang dem Umfang des Rahmens nebeneinander angeordneten Behandlungsstationen mit Werkzeugen, die zum Bearbeiten der Kunststoff-Formlinge dienen, wobei die Werkzeuge von vertikal bewegbaren Werkzeugschlitten getragen werden, von denen jeder durch eine in einer Kurve der Kurventrommel geführte Kurvenrolle auf-und abbewegt wird.

Wenn vorstehend der Grundrahmen als im wesentlichen zylindrisch bezeichnet wird, soll dies bedeuten, daß der Grundrahmen umlaufend ausgebildet ist. Er kann auch im Querschnitt als Vieleck oder als Hohlzylinder mit Abflachungen an der Mantelfläche ausgebildet sein.

Bei der Bearbeitung der Kunststoff-Formlinge wird es sich überwiegend um Formgebungsvorgänge handeln, in deren Verlauf die Gestalt des Formlings eine Änderung erfährt. Zur Durchführung dieser Formänderungen können erhebliche Kräfte erforderlich sein, die von den Kurven der Kurventrommel auf die Werkzeuge zu übertragen sind. Da die Behandlungsstationen mit den Werkzeugen außenseitig am Grundrahmen angebracht sind, werden sie normalerweise von diesem nach außen vorstehen, so daß zwischen der innerhalb des Grundrahmens angeordneten Kurventrommel und der vertikalen Ebene oder Achse, in welcher die die Formgebung bewirkenden Werkzeuge bewegt werden, ein im allgemeinen radialer Abstand vorhanden ist, über den die erforderlichen Kräfte übertragen werden müssen mit der Folge, daß die bei der Formgebung auftretenden Kräfte das Entstehen von Momenten bewirken, deren Größe mit zunehmendem Abstand zwischen Kurventrommel und Angriffspunkt der Kraft am Werkzeugschlitten ebenfalls zunimmt. Dabei ist zu berücksichtigen, daß ein gewisser Mindestabstand zwischen Kurventrommel bzw. daran geführter Kurvenrolle und dem zugeordneten Werkzeug nicht unterschritten werden kann, da Führungen für die die Werkzeuge tragenden Halterungen vorhanden sein müssen und auch zur Erzielung einer gewissen Übersichtlichkeit und Zugänglichkeit der Werkzeuge und anderer zugehöriger Teile diese gegenüber dem Gehäuse etwas nach außen versetzt sind.

Der Erfindung liegt die Aufgabe zugrunde, eine Vorrichtung der einleitend beschriebenen Art so auszugestalten, daß die aufgrund des im allgemeinen radialen Abstandes zwischen Kurvenrolle und Werkzeug bzw. dessen Halterung auftretenden Momente so klein wie möglich gehalten werden. Es kommt somit darauf an, eine Anordnung zu finden, bei welcher die Momente in möglichst einfacher und günstiger Weise von den dafür vorgesehenen Bauteilen aufgenommen werden. Außerdem wird angestrebt, daß die auftretenden wirksamen Hebelarme möglichst kurz sind. Die Wirksamkeit der Kraftübertragung von der Kurvenrolle auf das zugehörige Werkzeug soll dadurch nicht oder nur in einem vernachlässigbaren Umfang beeinträchtigt werden. Außerdem ist die Ausgestaltung so zu wählen, daß Betriebssicherheit, Zugänglichkeit und Übersichtlichkeit sowohl der Gesamtvorrichtung als auch der einzelnen Behandlungsstationen gewahrt bleiben.

Zur Lösung dieser Aufgabe schlägt die Erfindung vor, daß die Kurvenrolle von einem Antriebsschlitten getragen wird und Werkzeugschlitten und Antriebsschlitten jeweils für sich am Grundrahmen geführt und über nicht-starre Verbindungselemente miteinander verbunden sind und die vertikal verlaufenden Führungsmittel für beide Schlitten in der Projektion auf eine Ebene senkrecht zur Bewegungsrichtung der Schlitten bzw. der Längsachse des Grundrahmens zwischen Kurvenrolle und dem Punkt angeordnet sind, an welchem die aus der Bearbeitung der Formlinge resultierende Reaktionskraft am Werkzeugschlitten angreift.

Durch die Verwendung zweier kraftmäßig miteinander verbundener Schlitten für die Übertragung der Kraft von der Kurvenrolle auf das vom Werkzeugschlitten getragene Werkzeug und die sich dadurch ergebende Möglichkeit, beide Schlitten unabhängig voneinander an Führungsmitteln zu führen, die zwischen Kurve und Angriffspunkt der Reaktionskraft verlaufen, wird der Abstand zwischen Kurvenrolle und Angriffspunkt der Reaktionskraft derart aufgeteilt, daß sich günstigere Hebelarmverhältnisse ergeben. Die durch die am Antriebschlitten angreifenden Kräfte erzeugten Kippmomente werden von dem für den Antriebschlitten vorgesehenen Führungssystem aufgenommen. Die durch die am Werkzeugschlitten angreifenden Kräfte erzeugten Kippmomente werden von dem für den Werkzeugschlitten vorgesehenen Führungssystem aufgenommen, so daß die Summe aller Kippmomente auf zwei Führungssysteme verteilt wird.

Zur Erzielung einer übersichtlichen und möglichst einfachen Anordnung kann es zweckmäßig sein, Antriebschlitten und Werkzeugschlitten an gemeinsamen Führungsmitteln zu führen. Dabei besteht die Möglichkeit, die Führungsmittel für Antriebschlitten und Werkzeugschlitten in derselben Ebene anzuordnen. Letzteres wird insbesondere dann der Fall sein, wenn Antriebschlitten und Werkzeugschlitten an gemeinsamen Führungselementen geführt sind.

Als besonders zweckmäßig hat sich eine Ausgestaltung herausgestellt, bei welcher zwei zueinander parallele, einen Abstand voneinander aufweisende Führungsleisten vorgesehen sind, deren einander zugekehrten Seiten die Führungsflächen für den Antriebsschlitten und deren einander abgekehrten Seiten die Führungsflächen für den Werkzeugschlitten tragen. Es ist auch eine umgekehrte Anordnung denkbar, die jedoch weniger günstig ist, da der Antriebsschlitten die Kurvenrolle trägt und somit innen, d. h. näher an der Kurventrommel als der Werkzeugschlitten angeordnet sein sollte. Dabei ist im Grundrahmen eine Durchbrechung für den Durchgang eines Verbindungsgliedes zwischen Kurvenrolle und Antriebsschlitten vorzusehen. Eine Anordnung, bei welcher die einander zugekehrten Seiten der Führungsleisten die Führungsflächen für den Antriebsschlitten tragen, erlaubt die Anbringung der vorerwähnten Durchbrechung zwischen den beiden Führungsleisten jeder Behandlungsstation.

Die vorbeschriebene Ausgestaltung, bei welcher Antriebschlitten und Werkzeugschlitten zwar kraftmäßig zu einer Einheit zusammengefaßt, also miteinander verbunden sind, jedoch jeweils für sich geführt sind, gibt gemäß einem weiteren Vorschlag der Erfindung die Möglichkeit, Antriebschlitten und Werkzeugschlitten über ein die Kraft übertragendes Verbindungselement miteinander zu verbinden. Dessen den vertikalen Abstand zwischen beiden Schlitten bestimmende Länge kann einstellbar sein. Dadurch ist es möglich, die Lage des Werkzeugschlittens den jeweiligen Erfordernissen, also beispielsweise der Lage der Station, in welcher die Bearbeitung des Formlings erfolgt, anzupas sen, ohne daß dadurch zugleich auch die Lage des Antriebschlittens festgelegt wäre. Vielmehr kann letzterer in Abhängigkeit von den räumlichen Verhältnissen und unabhängig von der Position des Werkzeugschlittens dort angeordnet werden, wo die für die Betätigung der aus Antriebschlitten und Werkzeugschlitten bestehenden Arbeitseinheit erforderliche Kurve an der Kurventrommel angebracht ist. Dieser Möglichkeit kommt deshalb eine große Bedeutung zu, weil in vielen Fällen in einer Behandlungsstation mehrere Werkzeuge, die unabhängig voneinander betätigt werden, vorgesehen sein müssen, wobei diese Werkzeuge, die beispielsweise koaxial zueinander angeordnet sind, zumindest in bestimmten relativen Positionen zueinander nur einen sehr geringen Abstand voneinander aufweisen, der z. B. kleiner sein kann als die vertikale Erstreckung einer Kurve. Somit wird es in vielen Fällen nicht möglich sein, die Kurven für die Betätigung mehrerer in jeweils einer Arbeitsstation befindlicher Werkzeuge in so geringen Abständen, ggf. sogar abstandslos, voneinander anzuordnen wie dies bei den entsprechenden Werkzeuge der Fall ist. Die Erfindung macht es möglich, die Kurven für die Betätigung der in einer Behandlungsstation befindlichen Behandlungsmittel unabhängig von der Position der jeweiligen Werkzeuge anzuordnen, wobei der Abstand zwischen den den Kurvenrollen jeweils zugeordneten Antriebsschlitten und dem zugehörigen Werkzeugschlitten über die bezüglich ihrer Länge einstellbaren Verbindungselemente hergestellt wird.

Gemäß einem weiteren Vorschlag der Erfindung kann das Verbindungselement als Überlastkupplung ausgebildet oder mit einer Überlastkupplung versehen sein, die, falls es aufgrund irgendwelcher betrieblichen Umstände zu einer unzulässig großen Kraftbeanspruchung kommt, anspricht und die kraftübertragende Verbindung zwischen beiden Schlitten einer Arbeitseinheit löst.

Vorteilhaft ist das Verbindungselement als Stange ausgebildet, die normalerweise vertikal verlaufen wird.

In der Zeichnung ist ein Ausführungsbeispiel der Erfindung dargestellt. Es zeigen:

Fig. 1 im Schema die Seitenansicht einer Vorrichtung zum Bearbeiten von Kunststoff-Formlingen

Fig. 2 einen Schnitt nach der Linie II-II der Fig. 1,

Fig 3 die perspektivische Ansicht einer innerhalb des stationären Grundrahmens angeordneten Kurventrommel,

Fig. 4 die perspektivische Ansicht des Grundrahmens ohne zusätzliche Teile,

Fig 5 eine Ansicht in Richtung der Pfeile V-V der Fig. 9,

Fig. 6 die Einzelheit einer zweiten Ausführungsform,

Fig. 7 im Schema eine weitere Ausführungsform im Längsschnitt durch Grundrahmen und Kurventrommel,

Fig. 8 eine der Fig. 7 entsprechende Darstellung, in welcher die beiden zusammenwirkenden Schlitten eine andere relative Lage zueinander einnehmen,

Fig. 9 im Schema einen Längsschnitt durch Grundrahmen und Kurventrommel mit mehreren übereinander angeordneten, jeweils aus Antriebsschlitten und Werkzeugschlitten bestehenden Einheiten.

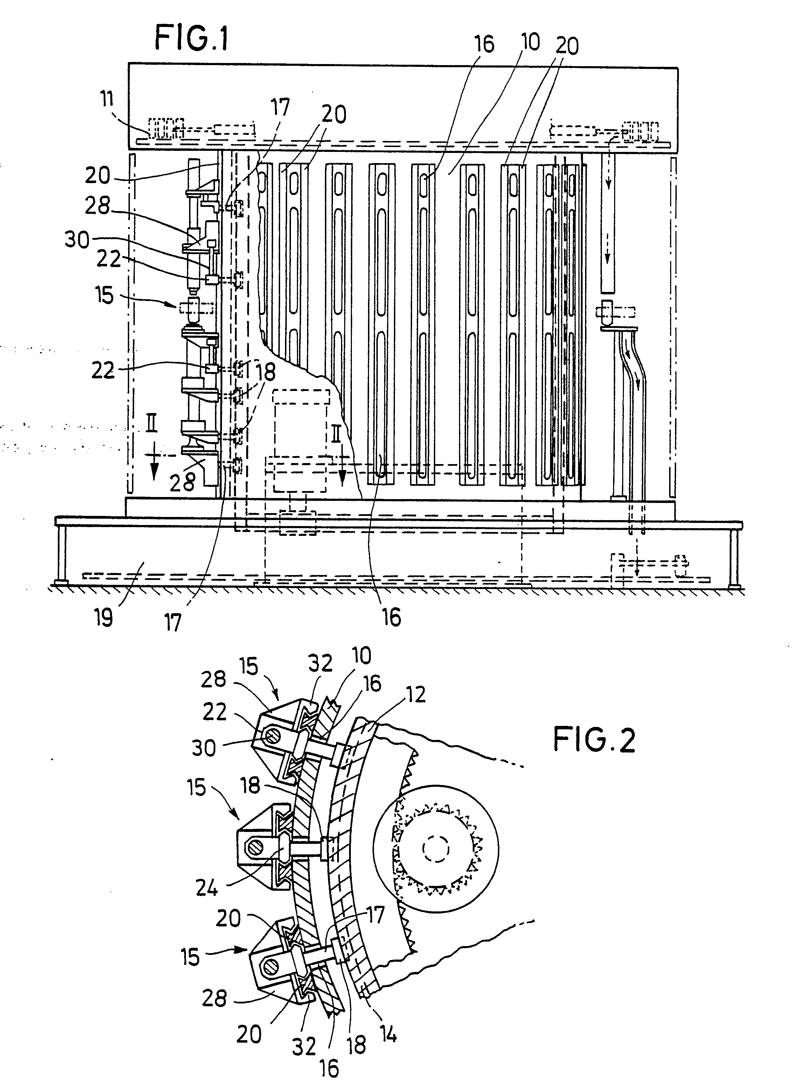

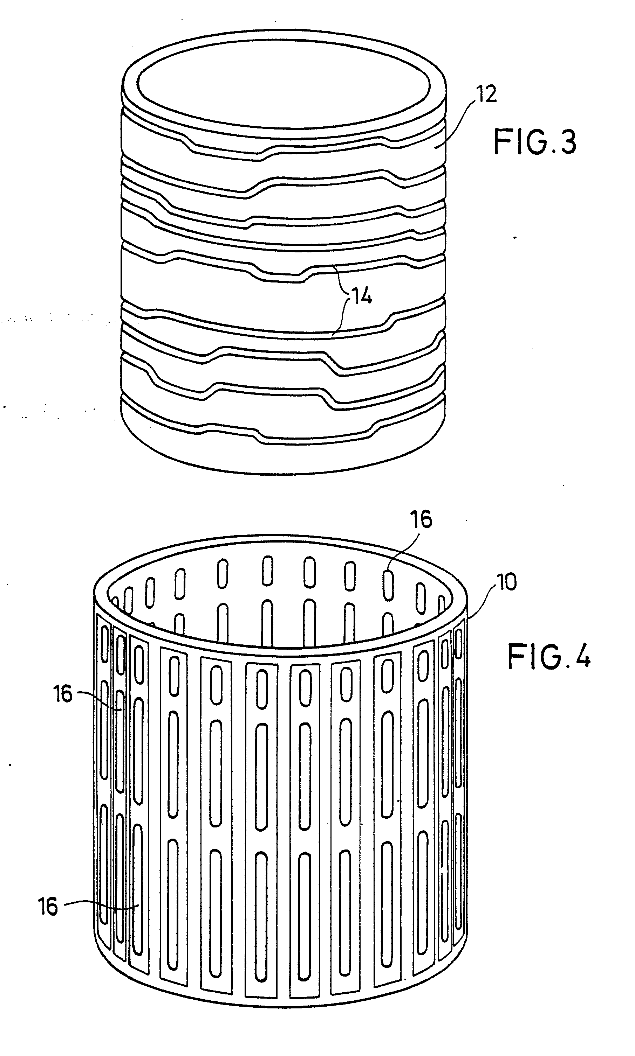

Der grundsätzliche Aufbau der Gesamtvorrichtung geht aus den Fig. 1 - 5 hervor. Sie ist mit einem im Querschnitt etwa kreisförmigen Grundrahmen 10 versehen, innerhalb dessen koaxial eine zentrale Kurventrommel 12 rotierbar angeordnet ist, die außenseitig mit mehreren in vertikalen Abständen voneinander angeordneten umlaufenden Arbeitskurven 14 versehen ist. Der Grundrahmen 10 trägt außen seitig in Umfangsrichtung in regelmäßigen Abständen nebeneinander angeordnete Behandlungsstationen 15. Jeder dieser am Grundrahmen 10 angeordneten Behandlungsstationen 15 sind mehrere vertikal verlaufende Schlitze 16 im Grundrahmen 10 für den Durchgang wenigstens einer Achse 17 für eine Kurvenrolle 18 zugeordnet.

Die in der Vorrichtung zu bearbeitenden Formlinge werden aus einer geeigneten Einrichtung, die beispielsweise einen Vorrat an Formlingen enthält, dem oberen Bereich 11 der Vorrichtung zugeführt und von dort über eine geeignete Fördereinrichtung den Behandlungsstationen 15 zugeführt. Diese Behandlungsstationen sind parallel zueinander geschaltet. D. h., daß jeder Formling nur eine Station 15 durchläuft. Im unteren Bereich 19 der Vorrichtung werden die bearbeiteten Formlinge gesammelt und von dort abtransportiert. Einzelheiten der Transporteinrichtungen sind nicht dargestellt, da sie nicht Teil der Erfindung sind.

In jeder Behandlungsstation 15 sind außenseitig am Grundrahmen 10 zwei parallel zu den Schlitzen 16, also vertikal verlaufendelineare Führungen vorgesehen, die in dem in der Zeichnung dargestellten Ausführungsbeispiel als Führungsleisten 20 ausgebildet sind. Die Schlitze 16 sind in der Mitte zwischen beiden Führungsleisten 20 einer Behandlungsstation 15 angeordnet. Die Führungsleisten 20 sind an ihren beiden einander zugekehrten und an ihren einander abgekehrten Seiten mit prismen-bzw. V-förmigen, nutartigen Führungsflächen 21, 23 versehen.

Jeder der am Grundrahmen angeordneten Behandlungsstationen 15 sind mehrere Antriebschlitten 22 zugeordnet, von denen jeder mit einer Kurvenrolle 18 und einem Führungsblock 24 versehen ist. Letzterer weist an seinen beiden den Führungsleisten 20 jeweils zugekehrten Seiten entsprechend der Ausgestaltung der Führungsflächen 21 vorspringende prismenbzw. V-förmige Führungsflächen 25 auf, die mit jeweils einer der beiden Leisten 20 in Eingriff sind, so daß der Antriebschlitten 22 von beiden Leisten 20 bei der durch ihm zugeordnete Kurven 14 über die zugehörige Kurvenrolle 18 auf ihn übertragende Auf- bzw. Abbewegung geführt ist. Beide Führungsleisten 20 sind an ihren Führungsflächen 21 und 23 mit Lagerrollen 26 versehen.

Jedem Antriebschlitten 22 ist ein Werkzeugschlitten 28 zugeordnet, der die für die jeweils an den Kunststofformlingen durchzuführenden Arbeiten erforderlichen Werkzeuge trägt. Diese sind in der Zeichnung aus Gründen der Übersichtlichkeitnur andeutungsweise dargestellt, zumal ihre konkrete Ausgestaltung von der jeweils durchzuführenden Art der Behandlung der Formlinge abhängt.

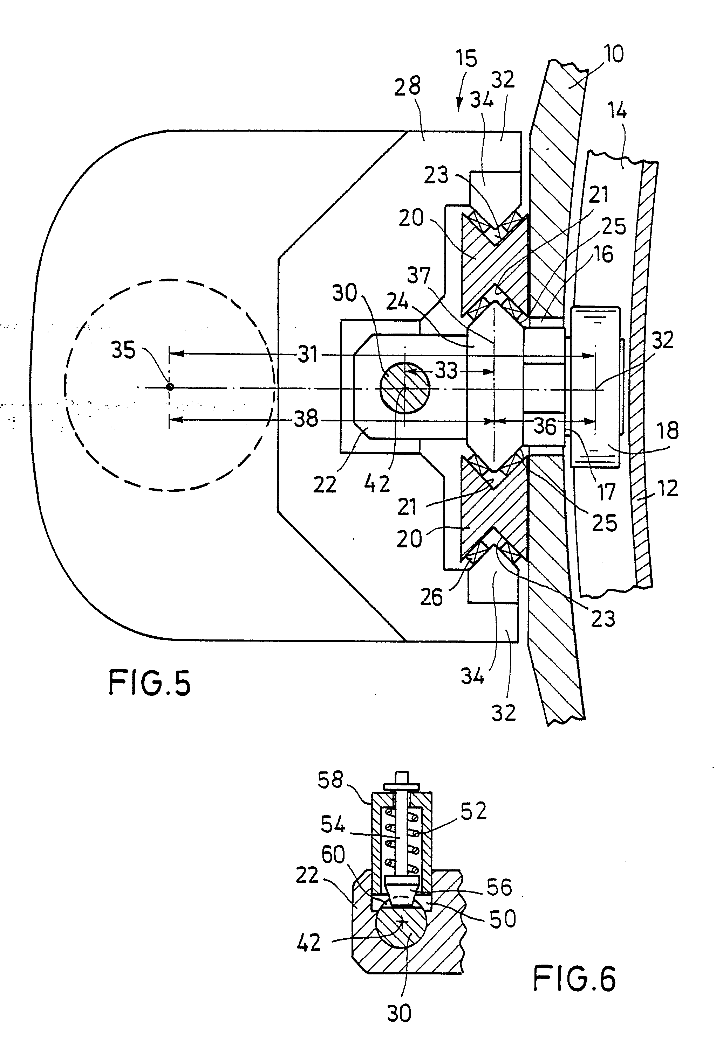

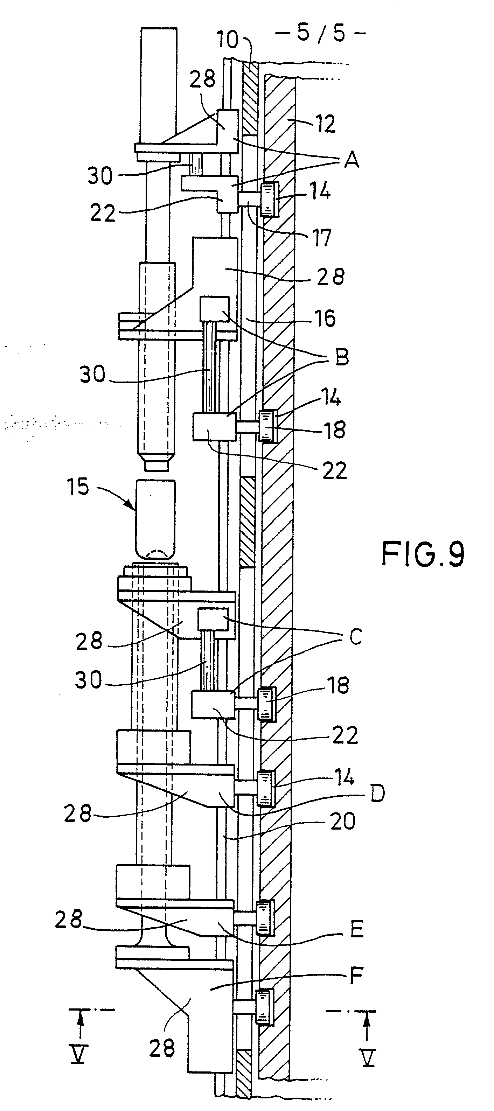

Insbesondere Fig. 5 läßt erkennen, daß der Werkzeugschlitten 28 an seiner dem Gehäuse 10 zugekehrten Seite mit zwei Fortsätzen 32 versehen ist, die die beiden Führungsleisten 20 außenseitig umgreifen. Jeder Fortsatz ist an seiner der benachbarten Führungsleiste 20 zugekehrten Seite mit einem Führungselement 34 versehen, dessen Querschnittsform und -abmessungen der Querschnittsform und den Querschnittsabmessungen der außenseitigen Führungsflächen 23 an beiden Führungsleisten 20 angepaßt sind, so daß die Führungselemente 34 in die außenseitigen Führungen beider Leisten 20 eingreifen. Auch hier sind Lagerrollen 26 an den Führungsflächen 28 vorgesehen. Somit werden Antriebschlitten 22 und Werkzeugschlitten 28 an denselben Führungsleisten 20, jedoch an unterschiedlichen Führungsflächen unabhängig voneinander geführt. Da die Kurvenrolle 18 des jeweiligen Antriebschlittens 22 mit der innerhalb des Grundrahmens 10 angeordneten Kurventrommel 12 zusammenwirkt, ist die gewählte Anordnung, bei welcher sich der Antriebschlitten 22 zwischen beiden Führungsleisten 20 befindet, während der Werkzeugschlitten 28 vor den Führungsleisten 20 mit seinen Fortsätzen 32 diese umgreifend angeordnet ist, besonders zweckmäßig, da der für den Durchgang der Achse 17 erforderliche Schlitz 16 zwischen den beiden jeweils in einer Behandlungsstation 15 angeordneten Führungsleisten 20 angebracht sein kann. Außerdem hat die vorbeschriebene Anordnung den Vorteil, daß aufgrund des größeren Abstands der beiden Führungsflächen für den Werkzeugschlitten 28 voneinander die unerwünschten Auswirkungen des zwangsläufig vorhandenen Spiels der Führung abnehmen. Dies ist bei koaxialer Anordnung mehrerer Werkzeuge, wie sie beispielsweise in Fig. 9 dargestellt ist, besonders wünschenswert.

Antriebschlitten 22 und Werkzeugschlitten 28 sind über ein Verbindungselement zu einer Arbeitseinheit verbunden, wobei die Verbindung jedoch nicht starr ist. Dieses Verbindungselement kann als Stange 30 ausgebildet sein, um so den ggf. vorhandenen vertikalen Abstand zwischen Werkzeugschlitten und zugehöriger Kurve zu überbrücken. Die Position des Werkzeugschlittens wird durch die Position der Behandlungsstation und die Position des vom Werkzeugschlitten getragenen Werkzeugs in der Behandlungsstation bestimmt. Die Position der zugehörigen Kurve auf der Kurventrommel 12 wird im allgemeinen abhängen davon, wieviel Kurven an der Kurventrommel angebracht werden müssen. Dies hängt wiederum ab von der Anzahl der durch die Kurventrommel in einer Behandlungsstation 15 zu betätigenden Werkzeugeoder Werkzeugteile und ggf. auch anderer Behandlungsmittel. Somit wird die Länge der Stange 30 vom jeweils zu überbrückenden Abstand zwischen Position der Behandlungsstation 15 und Position der zugehörigen Kurve 14 abhängen.

Durch die vorbeschriebene Ausgestaltung, also die Verwendung zweier unabhängig voneinander geführter Schlitten für die Übertragung der Kraft von der Kurvenrolle 18 auf das vom Werkzeugschlitten 28 getragene Werkzeug wird der Abstand 31 zwischen dem Angriffspunkt 32 der auf die Kurvenrolle 18 durch die Kurventrommel 12 übertragenen Kraft und dem Angriffspunkt 35 der aus der Behandlung des Formlings resultierenden Reaktionskraft des vom Schlitten 28 getragenen Werkzeugs aufgeteilt, d. h. für den Antriebsschlitten 22 auf den Hebelarm 36 zwischen Angriffspunkt 32 der Arbeitskraft an der Rolle 18 und der für beide Schlitten 22, 28 gemeinsamen Führungsebene 37 einerseits sowie auf den Hebelarm 33 zwischen dem Angriffspunkt 42 des Verbindungselements 30 und der Führungsebene 37 andererseits und für den Werkzeugschlitten 28 auf den Hebelarm 38 zwischen dem Angriffspunkt 35 der aus der Behandlung des Formlings resultierenden Reaktionskraft und der Führungsebene 37. D. h., daß die auf die Teile einwirkenden Momente wesentlich geringer und somit in ihren Auswirkungen besser beherrschbar sind als bei Verwendung nur eines Schlittens, der eine starre Einheit darstellt und somit auch dann kein besseres Ergebnis brächte, wenn er an zwei oder mehr Führungen geführt wäre, zumal die am Angriffspunkt 42 auf den Werkzeugschlitten 28 einwirkende Kraft des Verbindungselements 30 zwischen Angrifspunkt 35 und Führungsebene 37 wirksam ist und somit das aus dem Hebelarm 38 und der im Punkt 35 angreifenden Reaktionskraft resultierende Moment verringert, da die Kraft am Angriffspunkt 42 der Reaktionskraft im Punkt 35 entgegengerichtet ist. Nicht-Starrheit der Verbindung von Antriebsschlitten 22 und Werkzeugschlitten 28 über die Stange 30 - oder ein anderes geeignetes Kupplungselement - ist somit eine wesentliche Voraussetzung für das Eintreten der vorbeschriebenen Effekte. Die Nicht-Starrheit gilt nicht für die Kraftübertragung vom Antriebsschlitten auf den Werkzeugschlitten, sondern nur für eine gewisse, begrenzte Bewegbarkeit im wesentlichen in einer Ebene quer zur Längserstreckung der Kupplungsstange 30.

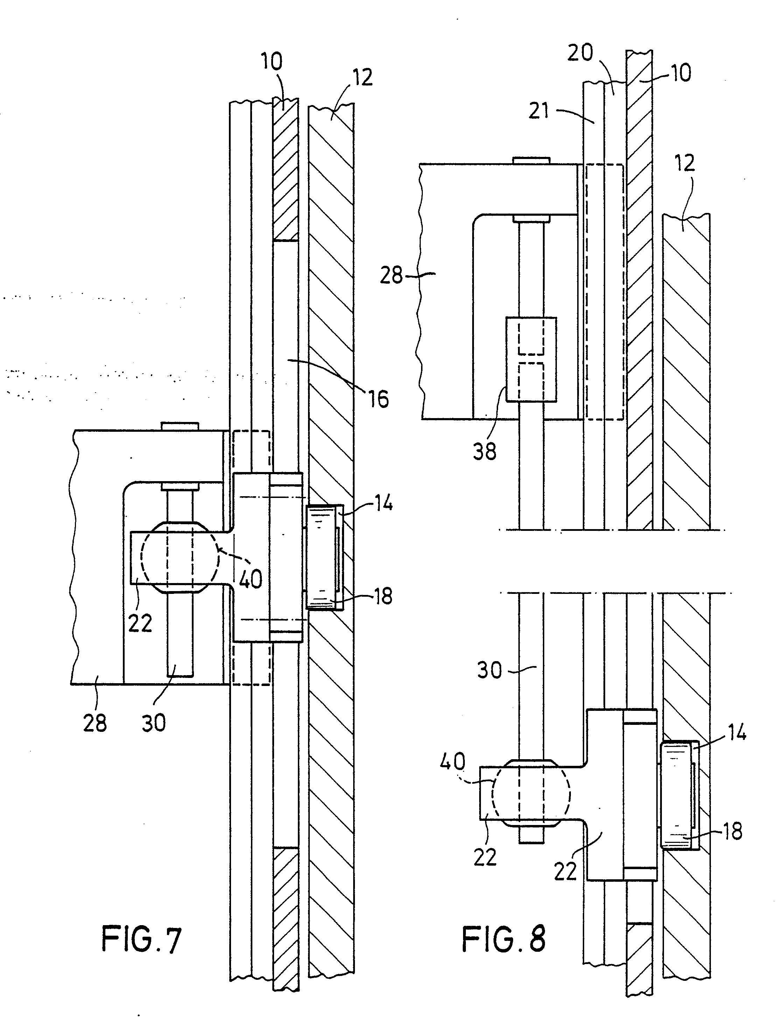

Bei dem in den Figuren 7 und 8 dargestellten Ausführungsbeispielen erfolgt deshalb die Verbindung zwischen Antriebsschlitten 22 und Kupplungsstange 30 über ein Gelenk 40. Es wird jedoch normalerweise nicht erforderlich sein, zur Erzielung einer im vorbeschriebenen Sinn nicht-starren Verbindung besondere Maßnahmen vorzusehen, da die unvermeidbare elastische Verformbarkeit der Kupplungsstange und auch der übrigen damit zusammenwirkenden Teile ausreicht, um die für die angestrebte Wirkung erforderliche nicht-starre Verbindung zu erhalten, die lediglich dazu dient, zu verhindern, daß die Führungskräfte des einen Schlittens die Führung des anderen Schlittens beeinflussen. Im wesentlichen geht es darum, das Übertragen von Drehmomenten von einem Schlitten auf den anderen zu verhindern.

Beim Ausführungsbeispiel gemäß Fig. 8 ist die Kupplungsstange 30 zweiteilig ausgebildet, wobei beide Teile durch eine Überlastkupplung 38 miteinander verbunden sind, die verhindern soll, daß bei Auftreten von Störungen und dadurch bewirkten zu großen Kräften irgendwelche Teile beschädigt oder zerstört werden.

Fig. 6 zeigt die schematische Darstellung einer möglichen Ausführungsform einer Überlastkupplung. Hierbei ist der Antriebschlitten 22 mit einer seitlichen Ausnehmung 50 versehen, in welcher ein unter der Belastung einer Druckfeder 52 stehender Bolzen 54 angeordnet ist, der an seinem der Verbindungsstange 30 zugekehrten Ende einen Kopf 56 trägt, der sich zu seinem freien Ende hin konisch verjüngt. Bolzen 54 und Druckfeder 52 sind von einem Gehäuse 58 umgeben, an welchem sich auch die Druckfeder an ihren dem Kopf 56 abgekehrten Ende abstützt. Das Gehäuse 58 ist in geeigneter Weise, beispielsweise durch nicht dargestellte Schrauben, mit dem Antriebschlitten 22, in dessen Ausnehmung 50 es eingesetzt ist, verbunden. Die Verbindungsstange 30 ist mit einer Querausnehmung 60 versehen, in welche der Kopf 56 des Bolzens 54 eingreift und so eine formschlüssige Verbindung zwischen Antriebschlitten 22 und Verbindungsstange 30 und somit den Werkzeugschlitten 28 herstellt. Der Kopf 56 wird bei Vorliegen normaler Betriebsverhältnisse durch die Druckfeder 52, die sich an seiner der Stange 30 abgekehrten Ende an diesem abstützt, in Eingriff mit der Stange 30 bzw. der darin befindlichen Ausnehmung 60 gehalten. Durch entsprechende Wahl der Feder 52, der Konizität des Kopfes 56 und der die Ausnehmung 60 begrenzenden Wandungen, die mit dem Kopf 56 zusammenwirken, kann eine bestimmte Maximalkraft eingestellt werden, die von Arbeitschlitten 22 auf die Verbindungsstange 30 und damit auf den Werkzeugschlitten übertragen wird. Falls diese Kraft überschritten wird, wird der Bolzen 54 unter Überwindung der Kraft der Feder aus seiner wirksamen Lage verschoben, so daß die Verbindung zwischen Bolzen 54 und Stange 30 und somit die Wirkverbindung zwischen Antriebschlitten 22 und Werkzeugschlitten 28 gelöst wird. Es sind aber auch andere Ausführungsformen der Überlastkupplung unter Verwendung an sich bekannter Mittel möglich.

Es war bereits erwähnt worden, daß ein weiterer Vorteil der Trennung zwischen Antriebschlitten und Werkzeugschlitten darin besteht, die Lage des Antriebschlittens 22 und damit der ihm zugeordneten Kurve auf der Kurventrommel 12 unabhängig von der Arbeitslage des Werkzeugschlittens 28 wählen zu können. Bei dem Ausführungsbeispiel gemäß Fig. 8 ist der Abstand zwischen beiden Schlitten 22, 28 verhältnismäßig groß. D. h., daß in diesem Fall die den Antrieb bewirkende Kurve sich in einem großen vertikalen Abstand vom zugeordneten Werkzeugschlitten 28 befindet. Beim Ausführungsbeispiel gemäß Fig. 7. hingegen sind beide Schlitten 22, 28 so angeordnet, daß sie kaum einen vertikalen Abstand voneinander aufweisen. Die beiden Anordnungen gemäß Fig. 7 und 8 können derselben Behandlungsstation 15 zugeordnet sein. D. h., daß in Abhängigkeit von der Anzahl der innerhalb einer Behandlungsstation durchzuführenden Behandlungen und somit bei Vorhandensein mehrerer Werkzeuge oder anderer Behandlungsmittel diese unabhängig von der Lage der Kurven auf der Kurventrommel 12 so positioniert werden, wie es den Erfordernissen hinsichtlich der relativen Lage der Werkzeuge und somit auch der zugehörigen Arbeitschlitten entspricht.

Fig. 9 zeigt die Anordnung mehrerer jeweils aus Antriebschlitten 22 und Werkzeugschlitten 28 bestehende Einheiten, die derselben Behandlungsstation 15 zugeordnet sind. Bei den beiden oberhalb der Behandlungsstation 15 befindlichen Einheiten A und B sind die beiden zusammengehörenden Schlitten 22 und 28 über jeweils eine Verbindungsstange 30 miteinander verbunden, die einen vertikalen Abstand zwischen den beiden jeweils zusammenwirkenden Schlitten überbrückt. Dies ist auch der Fall bei der oberen (C) der drei unterhalb der Behandlungsstation 15 befindlichen, jeweils aus Antriebschlitten 22 und Werkzeugschlitten 28 bestehenden Einheiten C, D, E, F. Hingegen ist bei den drei zuunterst befindlichen EinheitenD, E, F der Werkzeugschlitten 28 ohne Einhaltung eines Abstands mit dem jeweiligen Antriebschlitten verbunden, also in einer Weise, die etwa jener gemäß Fig. 7 entspricht. Fig. 9 läßt weiterhin erkennen, daß die Werkzeuge bzw. deren Träger der jeweils oberhalb und unterhalb der Behandlungsstation befindlichen Werkzeugschlitten 28 koaxial zueinander angeordnet sind.

Bei allen in der Zeichnung dargestellten Ausführungsbeispielen sind die Führungsmittel für beide Schlitten 22, 28 in einer gemeinsamen vertikalen Ebene angeordnet. Dies ist zur Erzielung des angestrebten Effektes nicht unbedingt erforderlich. Vielmehr ist es ohne weiteres möglich, für beide Schlitten getrennte Führungsmittel vorzusehen und die eigentlichen Führungen in unterschiedlichen vertikalen Ebenen verlaufen zu lassen. Dies würde jedoch einen größeren Raumbedarf für die Führungsmittel zur Folge haben. Somit dürfte die in der Zeichnung dargestellte Ausführungsform allen Anforderungen in besonders günstiger Weise Rechnung tragen.

Die Führungsmittel können auch abweichend von der in der Zeichnung dargestellten Ausführungsform z. B. als Stangen ausgebildet sein, die der Führung von an den Schlitten angebrachten Buchsen dienen.

## Ansprüche

1. Vorrichtung zum Behandeln von Formlingen aus Kunststoff mit einem im wesentlichen zylindrischen Grundrahmen (10), dessen Längsachse vertikal verläuft, und einer zentralen, dazu koaxialen Kurventrommel (12), die um die Längsachse drehbar gelagert und außenseitig mit umlaufenden Arbeitskurven (14) versehen ist, und mehreren entlang dem Umfang des Rahmens (10) nebeneinander angeordneten Behandlungsstationen (25) mit Werkzeugen, die zum Bearbeiten der Kunststofformlinge dienen, wobei die Werkzeuge von vertikal bewegbaren Werkzeugschlitten (28) getragen sind, von denen jeder durch eine in einer Kurve (14) der Kurventrommel (12) geführte Kurvenrolle (18) auf- und abbewegt wird, dadurch gekennzeichnet, daß letztere (18) von einem Antriebschlitten (22) getragen wird und Werkzeugschlitten(28) und Antriebschlitten (22) jeweils für sich am Grundrahmen (10) geführt und über nicht-starre Verbindungselemente (30) miteinander verbunden sind und die vertikal verlaufenden Führungsmittel (20) für beide Schlitten (22, 28) in der Projektion auf eine Ebene senkrecht zur Bewegungsrichtung der Schlitten (22, 28) zwischen Kurvenrolle (18) und dem Punkt (35) angeordnet sind, an welchem die aus der Behandlung des Formlings resultierende Reaktionskraft am Werkzeugschlitten (28) angreift.

2. Vorrichtung nach Anspruch 1, dadurch gekennzeichnet, daß Antriebschlitten (22) und Werkzeugschlitten (28) an gemeinsamen Führungsmitteln (20) geführt sind.

3. Vorrichtung nach Anspruch 1, dadurch gekennzeichnet, daß die Führungsmittel (20) für Antriebschlitten und Werkzeugschlitten in derselben Ebene (37) liegen.

4. Vorrichtung nach Anspruch 3, dadurch gekennzeichnet, daß Antriebschlitten und Werkzeugschlitten an gemeinsamen Führungselementen geführt sind.

5. Vorrichtung nach 1 und 2, dadurch gekennzeichnet, daß zwei zueinander parallele, einen Abstand voneinander aufweisende Führungsleisten (20) vorgesehen sind, deren einander zugekehrten Seiten die Führungsflächen (21) für den Antriebschlitten (22) und deren einander abgekehrten Seiten die Führungsflächen (23) für den Werkzeugschlitten (28) tragen.

6. Vorrichtung nach einem der vorhergehenden Ansprüche, dadurch gekennzeichnet, daßAntriebsschlitten (22) und Werkzeugschlitten (28) über ein Verbindungselement (30) miteinander verbunden sind.

7. Vorrichtung nach Anspruch 4, dadurch gekennzeichnet, daß das Verbindungselement als Überlastkupplung ausgebildet oder mit einer Überlastkupplung (38; 52, 54) versehen ist.

8. Vorrichtung nach einem der vorhergehenden Ansprüche, dadurch gekennzeichnet, daß die den vertikalen Abstand zwischen beiden Schlitten (22, 28) bestimmende Länge des Verbindungselementes (30) einstellbar ist.

9. Vorrichtung nach Anspruch 6 oder 7, dadurch gekennzeichnet, daß das Verbindungselement als Stange (30) ausgebildet ist.

## FIG.1

## FIG.2

FIG.3

FIG.4

FIG.5

FIG.6

FIG.7

FIG.8

FIG.9